Europäisches Patentamt

European Patent Office

Office européen des brevets

(11) Publication number: **0 042 890**
**B1**

(12) **EUROPEAN PATENT SPECIFICATION**

(45) Date of publication of patent specification: **23.01.85**

(21) Application number: **80302163.3**

(22) Date of filing: **27.06.80**

(51) Int. Cl.⁴: **F 01 C 1/32, F 02 B 53/04, F 02 B 53/08**

(54) **An internal combustion engine having an orbital inner body or piston member working in a housing.**

(43) Date of publication of application:
**06.01.82 Bulletin 82/01**

(45) Publication of the grant of the patent:
**23.01.85 Bulletin 85/04**

(84) Designated Contracting States:
**AT BE CH DE FR GB IT LI LU NL SE**

(56) References cited:
**AU-A- 10 751**
**US-A-1 969 651**
**US-A-3 812 828**
**US-A-3 977 369**
**US-A-4 021 160**

(73) Proprietor: **Gurley, James R.**
**Box 42 Route 5**
**Rutherfordton North Carolina 28139 (US)**

(72) Inventor: **Gurley, James R.**
**Box 42 Route 5**
**Rutherfordton North Carolina 28139 (US)**

(74) Representative: **Harvey, David Gareth et al**
**Graham Watt & Co. Riverhead**
**Sevenoaks Kent TN13 2BN (GB)**

Courier Press, Leamington Spa, England.

## Description

This invention relates to an internal combustion engine having an orbital inner body or piston member working in a housing and eccentrically connected with a power output shaft to rotate the latter while orbiting within the housing about a circular path, the inner body being restrained from rotation during its orbital movement about said path. The invention is directed specifically to an improved four-cycle internal combustion engine of the eccentric piston type.

Numerous designs of internal combustion engines have been proposed, developed and employed over the years. Since the early advent of the conventional reciprocating piston engine, technology has been directed to ways to reduce engine size, weight and cost in relation to power output, as well as to increase efficiency and reduce polluting emissions of the internal combustion engine. One approach in the effort to improve the efficiency of conversion of combustion energy into rotational motion of a drive shaft has been the development of the rotary engine. Basically, this engine employs a rotor element having a plurality of peripheral faces and apices. The rotor is mounted for eccentric rotation within a housing, with the apices sweepingly engaging the inner surfaces of the housing during rotor movement to divide the housing into respective variable-volume intake, compression, combustion and expansion chambers.

Similar machines comprising eccentric rotors in housings for performing paracyclic movements are disclosed in US—A—1,969,651; the machines specifically disclosed are pumps or compressors.

The prior art reciprocating piston engines have the inherent disadvantage of poor efficiency due to the loss of power in translating reciprocating motion of the pistons into rotary motion of the crankshaft because of misdirection of power forces through connecting rods and crank arms at other than an optimum 90° angle to the direction of eccentricity of the crankshaft during its rotation. Although the rotary engines provide advantages over reciprocating piston engines in terms of weight reduction and more efficient generation of rotary motion of the crankshaft, such rotary engines have suffered a continual problem of wear of the apices of the rotor or the seals thereat, and of the housing wall, due to the continuous sliding contact needed to seal and separate the chambers of the engine.

The present invention aims to provide a four-cycle internal combustion engine construction which overcomes many of the disadvantages found in prior art internal combustion engines of the prior art, and inter alia to attain improved engine efficiency by improving the transfer of combustion power forces to crankshaft rotation during each revolution of the crankshaft, and to reduce frictional wear on the relative moving surfaces of the engine.

An engine according to the present invention is characterised in that:

(a) the housing and inner body each comprise at least one peripheral lobe which interfit one within the other;

(b) at least one slidable element is held captive to the housing by mounting means therefor fast with the housing, the captive slidable elements restraining the inner body from rotating as it orbits;

(c) an intake and compression chamber for the or each pair of interfitting lobes is provided in the inner body by a recess therein and the or a slidable element is accommodated in the recess, the orbital motion of the inner body being effective to alter the volume of the chamber by moving the bottom of the recess towards and away from a confronting surface of the slidable element;

(d) the mounting means for said slidable element permitting to and fro endwise movement of the slidable element as the inner body orbits, and the sliding element, or a pair thereof, sealingly engage with the housing, housing lobe and with the interfitting inner body lobe to provide a sealed space which is divided by sealing contact between the peripheries of the interfitting lobes into variable volume chambers respectively for combustion and exhaust; and

(e) passageways within the housing and inner body are provided which, in the course of the said orbital motion, in turn communicate the or each intake and compression chamber first with an intake port opening to the housing, then with the or a combustion chamber, and thereafter communicate the or an exhaust chamber with an exhaust port opening from the housing.

The inner body is rendered incapable of rotating as it orbits by means of the captively mounted slidable element; desirably, rotation can be guarded against further by interengaging pins and grooves provided in the inner body and housing. The pins can, for instance, be fast with the housing when the grooves are formed in the inner body. When the orbital motion is circular, the grooves are of circular outline.

The housing can have a plurality of lobes spaced around its inner periphery, when the inner body will have a corresponding plurality of lobes interfitting therewith and a corresponding plurality of recesses each extending between a pair of body lobes and forming with associated slidable elements a plurality of intake and expansion chambers, communicatable in turn during the said orbital motion each with the intake port and then with a respective one of a plurality of combustion chambers formed between the interfitting lobes.

In the interest of overall performance, a portion of the peripheral wall of the or each inner body lobe which forms a portion of the or each power chamber is configured so as to impart combustion forces at substantially a right angle to the direction of eccentricity of the inner body (i.e. to the eccentric displacement from the rotation axis of the power output shaft) during the full fuel combustion and expansion cycle, thus providing more efficient transfer of combustion forces in the power chamber into rotational movement of the power output shaft.

Ways of carrying out the invention will be better understood from the following detailed description of preferred embodiments of the invention, which description is given by way of example, when taken together with the accompanying drawings, in which:

Figure 1 is a schematic sectional end view of a multilobe, internal combustion engine according to the present invention, taken generally along line I—I of Figure 2, and showing the disposition and arrangement of an inner body piston member and movable wall members thereof;

Figure 2 is a sectional view of the internal combustion engine, taken generally along line II—II of Figure 1, and looking in the direction of the arrows of Figure 1;

Figure 3 is an enlarged partial sectional view of the engine taken generally along line III—III of Figure 1 and looking in the direction of the arrows;

Figure 4 is an enlarged partial sectional view of the engine taken generally along line IV—IV of Figure 1 and looking in the direction of the arrows;

Figure 5 is an enlarged partial sectional view of the engine taken generally along line V—V of Figure 1 and looking in the direction of the arrows;

Figure 6 is a schematic sectional end view of a single-lobe internal combustion engine according to the present invention; and

Figure 7 is a schematic representation of the manner in which component parts of the engine may be machined from metal stock material.

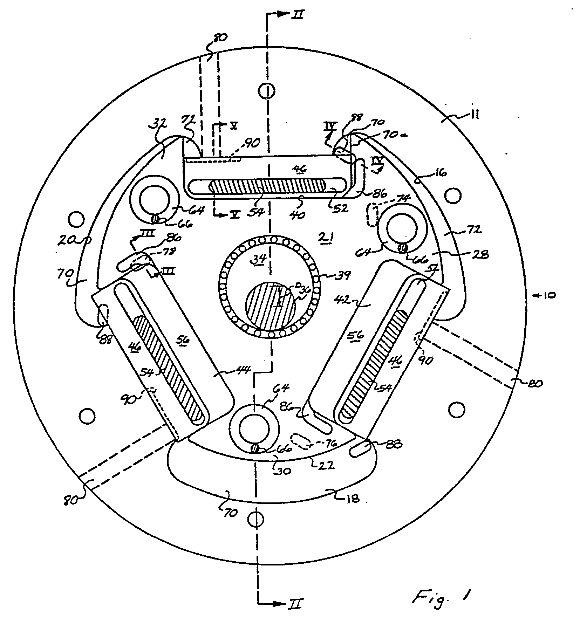

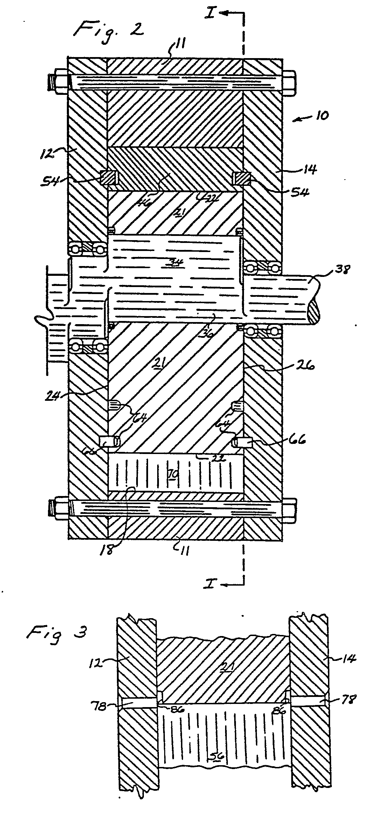

Referring more specifically to the drawings, Figures 1 to 5 illustrate one embodiment of the present invention wherein the internal combustion engine comprises three arcuately spaced groups of intake and compression, power and exhaust chambers, each of which groups cooperate to impart rotary motion to a power output shaft through non-rotational, orbital movement of an inner body piston member eccentrically mounted thereon. As best shown in Figures 1 and 2, the engine comprises a generally cylindrical housing 10 having an outer peripheral wall 11 and generally parallel end walls 12, 14 spaced apart by peripheral wall 11 along the longitudinal axis of the cylindrical housing; the said walls define an internal compartment in the housing. The inner surface of peripheral wall 11 defines three outer or housing lobes 16, 18, 20 of the compartment which are equally spaced about its periphery.

Located within the compartment is an inner body or "piston" member 21. Inner body 21 has a peripheral wall surface 22 and spaced parallel end wall surfaces 24, 26 which sealingly engage with a respective one of the end walls 12, 14 of the housing compartment. Inner body 21 also has a plurality of spaced peripheral lobes 28, 30, 32 corresponding in number to the housing lobes, and the inner body is mounted for clockwise orbital movement within the housing compartment on the eccentric portion 34 of a main crankshaft 36. As will appear from the subsequent description, the orbital motion is circular; when executing this motion, the inner body does not rotate about any fixed axis normal to its face seen in Figure 1, so its attitude as shown in Figure 1 remains unchanged as it orbits inside the housing. Crankshaft 36 is supported by bearings in the housing end walls 12, 14 for clockwise rotation about an axis parallel to and coincident with the longitudinal axis of the housing, and an output shaft portion 38 (Figure 2) of the crankshaft extends through an opening in the end wall 14 of the housing. As seen in Figure 1, inner body 21 is disposed in the compartment so that each of its peripheral lobes 28, 30, 32 is positioned for movement into a corresponding one of the housing lobes 16, 18, 20 during orbital movement of inner body 21 inside the compartment.

The inner body 21 has an opening by which it is mounted on the eccentric portion 34 of the crankshaft 36 through the agency of roller bearings 39 so that the eccentric portion is free to rotate within the said opening during rotation of the crankshaft. The central axis of eccentric portion 34 is displaced from the rotational axis of the output shaft by a distance, D, and the imaginary line joining the said two axes is hereinafter referred to as the crank arm.

The inner body 21 also is provided with peripheral recesses 40, 42, 44, each located between a pair of inner body lobes and each extending generally between adjacent pairs of compartment lobes. Disposed for movement within each inner body recess is a movable slide element or wall member 46 which extends from one end wall 12 to the other 14. Opposite ends of each wall member 46 possess an elongate groove 52. Each movable wall member 46 is mounted on housing end walls 12, 14 by spline elements 54 which are received in the grooves 52. Relative radially inward and outward movement between each member 46 and its accommodating recess occurs in response to orbital movement of the inner body. Together with the inner body, the members 46 define inner variable-volume fluid intake and compression chambers 56, one in each recess. (Two of the chambers 56 can be seen in an expanded condition in the position of the inner body shown in Figure 1.) The splines 54 and grooves 52 of the movable wall members also provide for alternating, endwise sliding movement of the wall members toward and away from the ends of the housing lobes between which each member 46 is located, in reponse to orbital movement of the inner body, for a purpose to be explained. The movable wall members 46 mounted captively on housing 10 by the splines sealingly engage side walls of each inner body peripheral recess and prevent rotational movement of the inner body during its orbital movement within the compartment, as well as form the intake and exhaust chamber in each recess.

Further to prevent rotational movement of the inner body during its orbital movement in the housing, anti-rotation means may be provided in end wall surfaces 24, 26 of the inner body 21 and the adjacent housing end walls 12, 14. As seen in Figures 1 and 2, the anti-rotation means comprise three spaced, circular grooves 64 in each body end wall surface 24, 26 and pins 66 attached to and extending inwardly from adjacent housing end walls 12, 14 into the grooves 64. The pins and grooves permit the inner body 21 to execute circular orbital movement in the housing, but prevent any rotational movement of the inner body in the compartment around the longitudinal axis of the housing. The anti-rotation means further ensure positive sealing engagement of peripheral wall portions of each inner body lobe with peripheral wall portions of its corresponding housing lobe, as will be explained.

As best seen in Figure 1, the peripheral and end wall surfaces of each inner body lobe cooperate with the peripheral and end walls of the housing, and with wall portions of each movable wall member to form an outer-variable-volume chamber for each compartment lobe 16, 18, 20. Each outer chamber is periodically subdivided into a power chamber 70 and an exhaust chamber 72 during a portion of the orbital movement of the inner body in the following manner. During clockwise orbital movement of inner body 21 about the rotational axis of crankshaft 36, every point on inner body 21 describes a circular path having a radius equal to the distance D, (Figure 1) between the rotational axis of shaft 36 and the central axis of eccentric portion 34 on which the inner body is mounted. It can thus be appreciated that during every complete orbit of the inner body and 360° of rotation of the output shaft, each inner body lobe likewise orbits in a circular path, having a radius of D, and moves inwardly and outwardly of its corresponding housing lobe during such circular orbital movement. During movement inwardly of the housing lobes, successive points along the periphery of each inner body lobe in the direction of orbital movement of the inner body progressively engage successive points along the peripheral wall of its housing lobe to form a positive seal therewith, subdividing the compartment lobe outer chamber into power chamber 70 and exhaust chamber 72. Each power and exhaust chamber so formed continuously varies in volume during orbital movement of the inner body. In the position of the inner body shown in Figure 1, it can be seen that outer compartment lobes 16 and 20 are each momentarily subdivided into a power chamber 70 and an exhaust chamber 72, while outer compartment lobe 18 is momentarily a fully expanded power chamber 70, as will be explained.

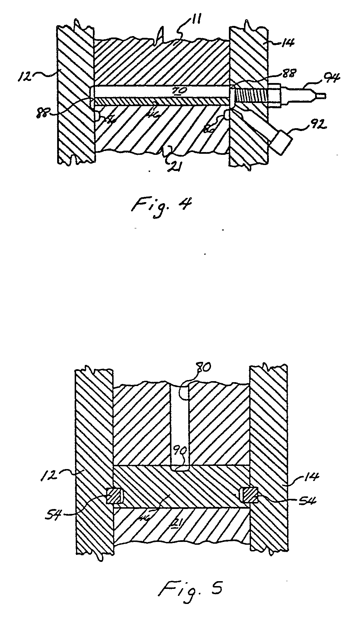

Housing 10 is provided with intake port means comprising three sets of paired fluid intake ports 74, 76, 78. The ports of each pair being located in opposed, aligned relation in end walls 12, 14 of the housing. Each pair of intake ports communicates with the housing compartment at a position adjacent a respective housing lobe and one end of a peripheral recess in the inner body. The compartment is further provided with exhaust discharge means comprising three exhaust ports 80 (Figures 1 and 5) in the peripheral wall of the housing, one being located between each adjacent pair of housing lobes.

Passageway means are provided for communicating each fluid intake and compression chamber 56 with a pair of intake ports 74, 76, 78 during a portion of the orbital movement of the inner body, and thereafter with the next adjacent power chamber thereto in the direction or orbital movement of the inner body. As seen in Figures 1, 3 and 4, extending from the right hand end of each inner body recess 40, 42, 44 in the surface of each inner body end wall 24, 26 is a generally elongate groove 86, the two grooves 86 communicating with the associated inner body recess and the intake and compression chamber formed therein.

As seen in Figures 1 and 4, the inner surfaces of the opposed housing end walls 12, 14 are also provided with two aligned grooves 88 adjacent and extending into the left hand end of each compartment lobe 16, 18, 20. Each opposed pair of grooves 88 is periodically registered with an adjacent pair of the elongate grooves 86 in the inner body to provide communication between the intake and compression chamber formed in each inner body recess with its next adjacent power chamber 70 in the direction of orbital movement of the inner body. Thus during orbit of the inner body in the housing compartment, each pair of elongate grooves 86 communicating with an inner body recess 40, 42, 44 move in a clockwise circular path first to overlie an adjacent pair of inlet ports 74, 76, 78 to admit fluid to the inner body recess chamber as the latter expands (note chamber 56 in recess 44 of Fig. 1). Thereafter, each pair of grooves 86 moves in its circular path to overlie a respective pair of housing end wall grooves 88 which open to the next adjacent compartment lobe power chamber 70. Fluid compressed thanks to reduction of the volume of the intake and compression chamber 56 due to relative motion between the recess 44 and the member 46 is then able to pass into power chamber 70 in housing lobe 16, 18, 20 for ignition.

As best seen in Figures 1 and 5, the radially outer face of each movable wall member 46 is provided with an elongate groove 90. Each groove 90 is located adjacent the right hand end of each housing lobe 16, 18, 20. Upon complete expansion of each power chamber 70 in each housing lobe (see chamber 70 in lobe 18, Fig. 1), and in response to continued orbital movement of the inner body, each movable wall member 46 will slide endwise on its two spline elements 54 so that its groove 90 overlies the housing lobe to communicate the exhaust chamber 72 in the lobe with the exhaust port 80 located adjacent thereto. (Note exhaust chambers 72 in housing lobes 16 and 20.) In this manner, expanded gases of combustion are discharged from the exhaust chamber 72 and from the engine housing.

Fuel for combustion in each of the three power chambers of the engine may be supplied by conventional carburetion with the intake air supplied to each of the intake chambers through intake ports 74, 76, 78. ALternatively, fuel may be injected directly into the compressed air in the power chamber at the beginning of the power cycle. As illustrated in Figure 4, communicating with the left hand end portion of each of the housing lobes 16, 18, 20 through a side wall of the housing is a fuel injector 92 for introducing fuel into the power chamber formed in each housing lobe.

Also communicating with the left ends of the housing lobes and the power chambers therein are suitable fuel ignition means. If the engine of the present invention is to be employed as a gasoline (petrol or benzene) combustion engine, a spark plug 94 is provided. If the engine is to be employed as a diesel engine, the ignition means may comprise a glow plug for initiating combustion of the diesel fuel injected into the power compartment. Conventional timing means, not shown, may be employed to sequence fuel injection and spark ignition in each power chamber 70.

The present invention may be better understood by a brief explanation of the operation of the three lobe engine just described. Referring to Figure 1, it can be seen that the housing compartment lobes 16, 18 and 20 are equally arcuately spaced about the central axis of the housing at 120° intervals, and the inner body lobes 28, 30, 32 are similarly spaced at 120° intervals about the central axis of the inner body. During clockwise rotation of the crankshaft, inner body 21 moves in a clockwise orbital path, with every point on the inner body describing a circular path having a radius equal to the distance of eccentricity, D, of the inner body axis from the axis of rotation of the crankshaft. Thus, during each 360° rotation of the crankshaft and full orbit of the inner body, each lobe of the inner body moves in a circular path inwardly and outwardly of its corresponding housing lobe, with consecutive portions along the periphery of the inner body lobe sequentially engaging consecutive peripheral wall portions of the housing lobe to divide the latter into a power chamber and an exhaust chamber.

At the same time, relative reciprocal movement between the wall elements 46 and their inner body recesses causes each of the intake and compression chambers 56 once during each 360° revolution of the crankshaft to fully expand and collapse. During expansion, the chambers 56 communicate with the inlet ports. Thereafter, the chambers 56 communicate with the next adjacent power chambers, 70 to pass compressed fluid thereinto during the latter portion of their compression strokes.

In the position of the inner body 21 shown in Figure 1, it can be seen that the intake and compression chamber in recess 40 is fully collapsed after the compression cycle, compressed fluid therefrom has been passed into the adjacent power chamber 70 in housing lobe 16, and grooves 86 have just passed out of communication with grooves 88. Accordingly, the power chamber 70 in lobe 16 contains compressed fluid and is sealed for initiation of combustion. Immediately upon combustion, it can be seen that the combustion force in power chamber 70 acts on a peripheral wall surface 70a of inner body lobe 28 which is substantially parallel to the crank arm of the crankshaft. Thus, the combustion and expansion force is applied to the inner body 21 and crankshaft 36 at a right angle to the crank arm to provide optimum transfer of force to impart rotation to the output shaft of the engine.

As the inner body lobe 28 moves further clockwise in lobe 16, the power chamber 70 will progressively expand during combustion to a position as is illustrated by power chamber 70 in compartment lobe 20. In this position of the power cycle, it can be seen that the peripheral wall surface of the inner body lobe on which the force of combustion is applied still lies substantially parallel to the crank arm of the crankshaft, thus continuing a right angle application of force thereto throughout the major portion of the power cycle of each power chamber.

Fuel conbustion in each power chamber 70 of the engine causes the power chamber to expand to its maximum dimensions through 240° of rotation of the crankshaft. The position of its inner body lobe with respect to the housing lobe when the power chamber is fully expanded is illustrated by the compartment lobe 18 and the adjacent inner body lobe 30. Continued clockwise orbital movement of the inner body lobe from the fully expanded power cycle position causes movable wall member 46 to slide sideways over the end portion of the housing lobe to communicate the chamber therein with exhaust port 80 by way of groove 90, thus forming an exhaust chamber 72 which progressively collapses to expel fluid from the housing. Although not shown, it is to be understood that suitable passages may be provided in the housing and inner body for circulation of a fluid cooling medium for the engine.

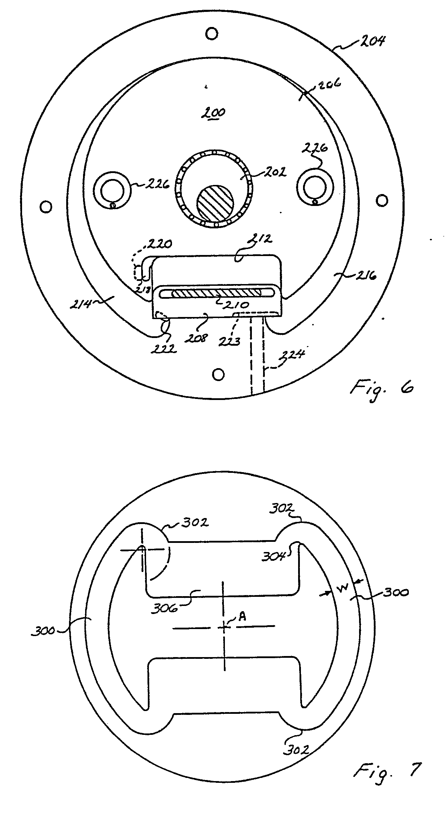

Although the invention shown in Figures 1—5 illustrates a three-lobe engine with three power cycles being initiated during each crankshaft revolution, it is to be understood that the engine of the present invention may comprise any number of housing and inner body lobes with corresponding power cycles per crankshaft revolution, depending upon the size, weight, and power requirements of the engine. Figure 6 illustrates schematically a one lobe engine embodiment of the invention wherein a single lobe inner body 200 is eccentrically disposed for non-rotational, orbital movement about a crankshaft 202 in a housing 204 having a single peripheral lobe. Disposed between opposite ends of the inner body lobe 206 and the housing lobe is a wall member 208 which is mounted on the housing by spline element 210 for reciprocal movement therealong. The member 208 is received in inner body peripheral recess 212, relative movement in a radial direction being permitted between the member 208 and the recess 212. The member 208 overlies end portions of the housing lobe when it reciprocates along the spline in response to orbital movement of the inner body, in the same manner as the movable wall members of Figures 1—5. During orbital movement of inner body 200, peripheral wall portions of the inner body sequentially engage peripheral wall portions of the housing compartment to form a variable volume power chamber 214 and a variable exhaust chamber 216 therein. Also during inner body movement, the variable volume intake and compression chamber formed in inner body recess 212 alternately communicates by way of passageway grooves 218 with two intake ports 220 (only one of each shown), and then with power chamber 214 through two grooves 222 (only one shown) to receive fluid and to pass compressed fluid to the power chamber, as in the three-lobe embodiment of Figure 1—5.

As can be seen, the movable wall member 208 is provided with an outer wall groove 223 to permit communication of exhaust chamber 216 with exhaust port 224 in the housing wall to discharge expanded gases of combustion therefrom during the four-cycle operation of the engine. In the one lobe embodiment of Figure 6, it can be seen that combustion and expansion of the gases in power chamber 214 occurs through approximately 360° of crankshaft rotation. Anti-rotation devices 226 of the type shown in the embodiment of Figures 1—5 may be utilised to ensure non-rotational movement of the inner body during its orbital movement in housing 204. Although not shown, fuel injection means and suitable spark initiation means may be employed in the end portion of power chamber 214 to introduce fuel into the chamber and ignite same during the combustion and power stroke of the engine.

As can be appreciated, the curvature of the peripheral wall of each inner body lobe and its corresponding compartment lobe are so shaped as to ensure sealing engagement of the peripheral inner body lobe wall with the peripheral compartment lobe wall during orbital movement of the inner body. In practice, this may be accomplished by machining an inner body and peripheral housing wall from a single metal cylinder, or block of material. As illustrated by a two lobe engine embodiment in Figure 7, the peripheral wall of a compartment housing and an inner body may be formed simultaneously by cutting a sinuous pathway 300 about a common axis A through the stock material, the width W of the pathway 300 being equal to the desired distance of eccentricity at which the inner body is to be mounted on a crankshaft from its axis of rotation. The radii of curvature of the end portions 302 of the compartment lobes are correspondingly cut to equal the distance of eccentricity plus the radius of curvature of the tip portion 304 of the inner body lobes. In this manner, sealing engagement of the inner body lobes with the compartment peripheral wall is ensured during orbital movement of the inner body in the housing. The depth of each inner body peripheral recess 306 must be twice the distance of eccentricity, or slight greater.

Although the engine of the present invention has been shown and described as having a single housing compartment and single inner body therein, it can be appreciated that the engine may be composed of multiple compartments with inner bodies positioned along the length of a crankshaft in similar fashion as the pistons of a conventional reciprocating piston engine. If the engine is to be composed of a plurality of compartments and inner bodies eccentrically mounted on the crankshaft, it will be understood that the intake and exhaust port means of each compartment would be suitably channeled to the exterior of the housing through the end walls to the peripheral wall thereof.

Although the embodiments of the invention shown and described in the drawings and specification employ plural pairs of passageways and intake ports for introducing fluid into each intake chamber and passing fluid from the intake chamber to the power chamber after compression, only one intake port and set of cooperating passageways may be utilized, if desired. The exact construction and arrangement of the passageways may be varied depending upon the number of inner body piston means and housing compartments utilized on a single crankshaft for the engine power output required.

The engines disclosed herein are particularly compact and possess the practical advantages that all the chambers, for intake, compression, combustion and exhaust are contained within a unitary housing compartment in which the piston member or inner body works and that all interconnecting fluid passageways are integral with the housing and inner body. The arrangement of coacting recesses and slidable elements is material in attaining a compact and efficient engine. The configuration of the or each inner body lobe such that combustion forces are exerted at about 90°, substantially throughout the combustion cycle, to the eccentric displacement of the axis about which the inner body orbits from the output shaft rotation axis significantly enhances power transmission to the shaft.

## Claims

1. An internal combustion engine having an orbital inner body or piston member (21, 200) working in a housing (10, 204) and eccentrically connected with a power output shaft (36, 38) to rotate the latter while orbiting within the housing about a circular path, the inner body being restrained from rotation during its orbital motion about said path, characterised in that:

(a) the housing (10, 204) and inner body (21, 200) each comprise at least one peripheral lobe (16, 18, 20 or 206 and 28, 30, 32 or 200) which interfit one within the other

(b) at least one slidable element (46 or 208) is held captive to the housing by mounting means (54, 210) therefor fast with the housing (10, 204), the captive slidable element (46, 208) restraining the inner body (21, 200) from rotating as it orbits;

(c) an intake and compression chamber (56) for the or each pair of interfitting lobes is provided in the inner body (21, 200) by a recess (40, 42, 44 or 212) therein and the or a slidable element (46 or 208) is accommodated in the recess, the orbital motion of the inner body (21, 200) being effective to alter the volume of the chamber (56) by moving the bottom of the recess towards and away from a confronting surface of the slidable element (48, 208);

(d) the mounting means (54, 210) for said slidable element (46, 208) permitting to and fro endwise movement of the slidable element as the inner body orbits, and the sliding element, or a pair thereof, sealingly engage with the housing, housing lobe (16, 18, 20 or 206) and with the interfitting inner body lobe (28, 30, 32 or 206) to provide a sealed space which is divided by sealing contact between the peripheries of the interfitting lobes in variable volume chambers (70, 72) respectively for combustion and exhaust; and

(e) passageways (86, 88, 90, 218, 220, 223) within the housing and inner body are provided which, in the course of the said orbital motion, in turn communicate the or each intake and compression chamber (56) first with an intake port (76, 220) opening to the housing, then with the or a combustion chamber (70), and thereafter communicate the or an exhaust chamber (72) with an exhaust port (80, 224) opening from the housing.

2. An internal combustion engine as claimed in claim 1, characterised in that interengaging pins (66) and grooves (64, 226), with which the inner body and housing are furnished, assist the or each slidable element to render the inner body incapable of rotating as it orbits about the circular path.

3. An internal combustion engine as claimed in claim 1 or claim 2, characterised in that the housing (10) has a plurality of lobes (16, 18, 20) spaced around its inner periphery, the inner body (21) has a corresponding plurality of lobes (28, 30, 32) interfitting therewith and a corresponding plurality of recesses (40, 42, 44) each extending between a pair of body lobes and forming with associated slidable elements (46) a plurality of intake and expansion chambers (56), communicatable in turn during the said orbital motion each with the intake port and then with a respective one of a plurality of combustion chambers (70) formed between the pairs of interfitting lobes (16, 28; 18, 30 or 20, 32), for each pair of interfitting lobes the sealed space being defined by the housing, the interfitting lobes and a pair of successive slidable elements (46).

4. An internal combustion engine as claimed in claim 1, 2 or 3, characterised in that the housing has a peripheral wall (11) and a pair of parallel end walls (12, 14) spaced apart by the peripheral wall, the inner body has an outer peripheral wall (22) and a pair of parallel end walls (24, 26) spaced apart by the inner body peripheral wall, the inner body and housing being axially aligned with respective inner body end walls (24, 26) sealingly engaging adjacent housing end walls (12, 14); and wherein for the or each pair of interfitting lobes the intake port (76) is provided in one housing end wall and the exhaust port is provided in the housing peripheral wall (11), and in that for the or each pair of interfitting lobes the passageways comprise (A) a first generally elongate groove (86) in an inner body end wall which communicates with the variable-volume fluid intake and compression chamber (56), (B) a second groove (88) in the corresponding housing end wall (12 or 14) communicating with the combustion chamber, and (C) a third groove (90) in a surface of the slidable element (54), the first groove being positioned to communicate the intake port (78) with the intake and compression chamber (56) during a first portion of the said orbital movement to introduce fluid into the said chamber (56) and thereafter to communicate with the second groove (88) during a second portion of the orbital movement to pass compressed fluid from the said intake and compression chamber into the combustion chamber (70), and the third groove being positioned to communicate said exhaust chamber (72) with the exhaust port (80) to discharge expanded fluid from the exhaust chamber at least during a further portion of the said orbital movement.

5. An internal combustion engine as claimed in any preceding claim, characterised in that the inner body is mounted on an eccentric portion (34) of the output shaft (36, 38) on bearing means (39) for rotational movement of said power output shaft during orbital movement of the inner body in the housing; and the peripheral wall of the or each inner body lobe (28, 30, 32) defines a wall portion of said combustion chamber which extends generally parallel to the direction of displacement of the eccentric portion (34) of said shaft from the rotational axis thereof during the said orbital movement.

6. An internal combustion engine as claimed in claim 4, characterised in having a plurality of pairs of interfitting lobes and an intake port (78) for each which is positioned adjacent an end of the associated intake and compression chamber (56) and the combustion chamber (70) to be supplied with fluid thereby and there is an exhaust port (80) for each pair of interfitting lobes which is located in the housing peripheral wall between each adjacent pair of housing lobes.

7. An internal combustion engine as claimed in any one of the preceding claims, characterised by means (92) on the housing for introducing combustible fuel into the or each power chamber (70) for combustion therein to impart force to a peripheral wall portion of the inner body defining a portion of the said power chamber.

**Revendications**

1. Moteur à combustion interne comportant une corps interne ou piston orbital (21, 200) qui travaille dans un carter (10, 204) et est relié excentriquement à un arbre de sortie de puissance (36, 38) pour faire tourner cet arbre, pendant que ce piston effectue dans le carter un mouvement orbital selon une trajectoire circulaire, le piston étant empêché de tourner durant son déplacement orbital selon cette trajectoire, moteur caractérisé en ce que:

a) le carter (10, 204) et le piston (21, 200) comporte chacun au moins un lobe périphérique (16, 18, 20 ou 206 et 28, 30, 32 ou 206) qui s'emmanchent l'un dans l'autre

b) au moins un organe coulissant (46 ou 208) est maintenu captif du carter par des moyens de montage (54, 210) qui sont fixés au carter (10, 204), l'organe coulissant captif (10, 204) empêchant le piston (21, 200) de tourner lors de son déplacement orbital

c) une chambre d'admission et de compression (56) pour chaque lobe ou chaque paire de lobes s'emmanchant est formée dans le piston (21, 200) par un renfoncement (40, 42, 44 ou 212) de celui-ci et le ou un organe coulissant (46, 208) est logé dans le renfoncement, le déplacement orbital du piston (21, 200) ayant pour effet de modifier le volume de la chambre (56) en rapprochant le fond du renfoncement d'une surface en regard de l'organe coulissant (46, 208) ou en l'éloignant de cette surface

d) des moyens de montage (54, 210) de l'organe coulissant (46, 208) permettant un mouvement de va-et-vient de cet organe coulissant lorsque le piston effectue le déplacement orbital et l'élément coulissant ou une paire d'élément coulissant coopérant de. manière étanche avec le carter, le lobe (16, 18, 20 ou 206) du carter et avec et lobe d'emmanchement (28, 30, 32 ou 206) du piston de manière à former un espace étanche qui est divisé, par contact d'étanchéité entre les périphéries des lobes emmanchant, en des chambre de volume variable (70, 72) respectivement destinés à la combustion et à l'échappement; et

e) des passages (86, 88, 90, 218, 220, 223) sont prévus dans le carter et le piston et au cours du déplacement orbital, il font communiquer successivement la ou chaque chambre d'admission et de compression (56) d'abord avec un orifice d'admission (76, 220) ouvrant vers le carter, puis avec la ou une chambre de combustion (70), et ensuite communiquer la ou une chambre d'échappement (72) avec une orifice d'échappement (80, 224) débouchant hors du carter.

2. Moteur à combustion interne selon la revendication 1, caractérisé en ce que des groupilles (66) et des gorges (64, 226) coopérant entre elles dont le piston et le carter sont munis, aident le ou chaque organe coulissant à rendre le piston incapable d'une rotation lorsqu'il effectue le mouvement orbital selon la trajectoire circulaire.

3. Moteur à combustion interne selon la revendication 1 ou 2, caractérisé en ce que le carter (10) comporte plusieurs lobes (16, 18, 20) espacés sur sa périphérie intérieure, le piston (21) comporte un nombre correspondant de lobes (28, 30, 32) s'emmanchant dans les premiers et un numbre correspondant de renfoncements (40, 42, 44) s'étendant chacun entre un paire de lobes du piston et formant avec des organes coulissants (46) associés un certain nombre de chambres d'admission et de détente, communicant successivement durant ledit déplacement orbital, chacune avec l'orifice d'admission et ensuite avec une chambre respective de la série de chambres de combustion (70) formées entre les paires de lobes s'emmanchant (16, 28, 18, 30 ou 20, 32) pour chaque paire de lobes s'emmanchant l'espace étanche étant défini par le carter, les lobes s'emmanchant et une paire d'organes coulissant (46) successifs.

4. Moteur à combustion interne selon la revendication 1, 2 ou 3, caractérisé en ce que le carter possède une paroi périphérique (11) et une paire de parois extrémité parallèles (12, 14) espacées l'une de l'autre par la paroi périphérique, le piston a une paroi périphérique extérieure (22) et une paire de paroi d'extrémité parallèles (24, 26) espacés l'une de l'autre par la paroi périphérique du piston, le piston et le carter étant alignés axialement avec les parois d'extrémité du piston respectives (24, 26) coopérant de manière étanche avec le parois d'extrémité du carter adjacentes (12, 14) et en ce que pour la ou chaque paire de lobes s'emmanchant l'orifice d'admission (76) est prévu dans une paroi d'extrémité du carter et l'orifice d'échappement est prévu dans la paroi périphérique (11) du carter, et en ce que pour la ou chaque paire de lobes s'emmanchant, les passages comprennent (A), dans une paroi d'extrémité du piston, une première gorge (86) généralement allongée, qui communique avec la chambre d'échappement et de compression de fluide (56) à volume variable (B), dans la paroi d'extrémité correspondante du carter (12 ou 14), une deuxiéme gorge (88) qui communique avec la chambre de combustion, et, (C) dans une surface de l'organe coulissant (54), une troisième gorge (90), la première gorge étant positionnée de façon à faire communiquer l'orifice d'admission (78) avec le chambre d'admission et de compression (56) pendant la première partie dudit mouvement orbital pour l'introduction du fluide dans cette chambre (56) puis avec le deuxième gorge (88) pendant la deuxième partie du mouvement orbital pour faire passer le fluide comprimé de la dite chambre d'admission et de compression dans la chambre de combustion (70), et la troisième gorge étant positionnée de façon à faire communiquer ladite chambre d'échappement (72) avec l'orifice d'échappement (80) de manière à décharger le fluide détendu de la chambre d'échappement au moins pendant une autre partie dudit mouvement orbital.

5. Moteur à combustion interne selon l'une quelconque des revendications précédentes, caractérisé en ce que le piston est monté sur une partie excentrique (34) de l'arbre de sortie (36, 38) sur des paliers (39) en vue du mouvement de rotation de cet arbre de sortie de puissance pendant le mouvement orbital du piston dans le carter, et la paroi périphérique de la ou de chaque paire de lobes (28, 30, 32) constitue une partie de paroi de ladite chambre de combustion qui s'étend généralement parallèlement à la direction du déplacement de la partie excentrique (34) dudit arbre par rapport à l'axe de rotation de ce dernier pendant le mouvement orbital.

6. Moteur à combustion interne selon la revendication 4, caractérisé en ce qu'il comporte plusieurs paires de lobes s'emmanchant et pour chaque paire qui est un orifice d'admission (78) adjacent à une extrémité de la chambre d'admission et de compression (56) associé, la chambre de combustion (70) pouvant être alimentée en fluide par ce moyen et en ce que pour chaque paire de lobes s'emmanchant est prévu un orifice d'échappement (80) qui est situé dans la paroi périphérique du carter entre chaque paire adjacente de lobes du carter.

7. Moteur à combustion interne selon l'une quelconque des revendications précédentes, caractérisé par des moyens (92) sur le carter pour introduire du combustible dans la ou chaque chambre de puissance (70) pour la combustion à l'intérieur de celle-ci afin de communiquer une force à une partie de la paroi périphérique du piston délimitant une partie de ladite chambre de puissance.

**Patentansprüche**

1. Brennkraftmaschine mit einem in einem Gehäuse (10, 204) arbeitenden Wälzkolben oder Kolbenelement (21, 200), das exzentrisch mit einer Kraftabgabewelle (36, 38) für deren Drehung während seines Umlaufs innerhalb des Gehäuses entlang einer kreisförmigen Bahn verbunden und dabei an einer Drehung während seiner Umlaufbewegung auf der Kreisbahn gehindert ist, dadurch gekennzeichnet, daß

(a) das Gehäuse (10, 204) und der Wälzkolben (21, 200) jeweils zumindest eine umfangsseitige, ineinanderpassende Vorwölbung (16, 18, 20; 206) bzw. Einwölbung (28, 30, 32; 200) umfassen;

(b) zumindest ein Gleitelement (46; 208) an das Gehäuse (10, 204) durch an diesem festgelegte Haltemittel (54, 210) gebunden ist, wobei das Gleitelement (46, 208) den Wälzkolben (21, 200) bei dessen Umlauf an einer Drehung hindert;

(c) eine Einlaß- und Kompressionskammer (56) für das oder jedes Paar ineinanderpassender Vor- und Einwölbungen im Wälzkolben (21, 200) durch eine Ausnehmung (40, 42, 44; 212) in diesem gebildet und das oder ein Gleitelement (46; 208) in der Ausnehmung aufgenommen ist, wobei durch die Umlaufbewegung das Wälzkolbens (21, 200) das Volumen der Kammer (56) verändert wird, indem der Boden der Ausnehmung auf eine gegenüberliegende Fläche des Gleitelements (48, 208) zu und von diesem fort bewegt wird;

(d) die Haltemittel (54, 210) für das Gleitelement (46, 208) dessen Hin- und Herbewegung in Längsrichtung beim Umlauf des Wälzkolbens ermöglichen und das Gleitelement oder ein Paar von Gleitelementen mit dem Gehäuse, der Gehäuseeinwölbung (16, 18, 20; 206) und mit der Wälzkolbenvorwölbung (28, 30, 32; 206) zur Bildung eines abgedichteten Raums in Dichtungseingriff steht, der durch Dichtungsberührung zwischen dem Umfang der ineinanderpassenden Vor- und Einwölbungen in Verbrennungs- bzw. Auspuffkammern (70, 72) veränderlichen Volumens unterteilt ist; und

(e) Kanäle (86, 88, 90, 218, 220, 223) im Gehäuse und Wälzkolben vorgesehen sind, die während der Umlaufbewegung ihrerseits die oder jede Einlaß- und Kompressionskammer (56) zunächst mit einem sich zum Gehäuse öffnenden Einlaßkanal (76, 220), sodann mit der oder einer Verbrennungskammer (70) und danach die oder eine Auspuffkammer (72) mit einem vom Gehäuse ausmündenden Auspuffkanal (80, 224) verbinden.

2. Brennkraftmaschine nach Anspruch 1, dadurch gekennzeichnet, daß ineinandergreifende Stifte (66) und Nuten (64, 226), mit denen der Wälzkolben und das Gehäuse versehen sind, im Verein mit dem oder jedem Gleitelement den Wälzkolben bei seinem Umlauf entlang der Kreisbahn drehungsunfähig halten.

3. Brennkraftmaschine nach Anspruch 1 oder 2, dadurch gekennzeichnet, daß das Gehäuse (10) mehrere mit Abstand entlang seinem Innenumfang angeordnet Einwölbungen (16, 18, 20) aufweist, der Wälzkolben mit einer entsprechenden Anzahl von in diese hineinpassenden Vorwölbungen (28, 30, 32), versehen ist und eine entsprechende Anzahl von Ausnehmungen (40, 42, 44) vorgesehen ist, die sich jeweils zwischen einem Paar von Kolbenvorwölbungen erstrecken und mit zugehörigen Gleitelementen (46) eine Anzahl von Einlaß- und Expansionskammern (56) bilden, die ihrerseits während der Umlaufbewegung jeweils mit dem Einlaßkanal und sodann mit der jeweiligen Kammer einer Anzahl von zwischen den Paaren ineinanderpassenden Vor- und Einwölbungen (16, 28; 18, 30; 20, 32) gebildeten Verbrennungskammern (70) in Verbindung bringbar sind, wobei für jedes Paar ineinanderpassender Vor- und Einwölbungen der abgedichtete Raum vom Gehäuse, den ineinanderpassenden Vor- und Einwölbungen und einem Paar aufeinanderfolgender Gleitelemente (46) gebildet ist.

4. Brennkraftmachine nach Anspruch 1, 2 oder 3, dadurch gekennzeichnet, daß das Gehäuse eine Umfangswand (11) und ein Paar von dieser im Abstand voneinander gehaltener, paralleler Stirnwände (12, 14) aufweist, der Wälzkolben eine äußere Umfangswand (22) und ein Paar von dieser im Abstand voneinander gehaltener, paralleler Stirnwände (24, 26) besitzt, der Wälzkolben und das Gehäuse mit den entsprechenden, mit den angrenzenden Gehäusestirnwänden (12, 14) in Dichtungseingriff stehenden Kolbenstirnwänden (24, 26) axial ausgerichtet sind und für das oder jedes Paar ineinanderpassender Vor- und Einwölbungen der Einlaßkanal (76) in einer Gehäusestirnwand und der Auslaßkanal in der Gehäuseumfangswand (11) vorgesehen ist, daß ferner für das oder jedes Paar ineinanderpassender Vor- und Einwölbungen die Kanäle (A) eine erste im allgemeinen langgestreckte Nut (86) in einer Wälzkolbenstirnwand, die mit einer mediumeinlaß- und Kompressionskammer (56) veränderlichen Volumens in Verbindung steht, (B) eine zweite Nut (88) in der entsprechenden Gehäusestirnwand (12; 14), die mit der Verbrennungskammer in Verbindung steht, und (C) eine dritte Nut (90) in einer Oberfläche des Gleitelements (54) umfassen, wobei die erste Nut derart angeordnet ist, daß der Einlaßkanal (78) mit den Einlaß- und Kompressionskammer (56) während eines ersten Teils der Umlaufbewegung für eine Einführung von Medium in diese Kammer (56) und danach mit der zweiten Nut (88) während eines zweiten Teils der Umlaufbewegung für ein Überleiten komprimierten Mediums von der Einlaß- und Kompressionskammer in die Verbrennungskammer (70) verbunden ist, und die dritte Nut derart angeordnet ist, daß die Auspuffkammer (72) mit dem Auspuffkanal (80) für ein Abgeben expandierten Mediums aus der Auspuffkammer zumindest während eines weiteren Teils der Umlaufbewegung verbunden ist.

5. Brennkraftmaschine nach einem der vorhergehenden Ansprüche, dadurch gekennzeichnet, daß der Wälzkolben auf einem exzentrischen Bereich (34) der Kraftabgabewelle (36, 38) auf lagern (39) für eine Drehbewegung der Kraftabgabewelle während des Umlaufs des Wälzkolbens im Gehäuse angebracht ist und die Umfangswand der oder jeder Wälzkolbenvorwölbung (28, 30, 32) eine Wandbereich der Verbrennungskammer begrenzt, der sich im wesentlichen parallel zur Verlaugerungsrichtung des exzentrischen Bereichs (34) der Welle von deren Drehachse während der Umlaufbewegung erstreckt.

6. Brennkraftmaschine nach Anspruch 4, dadurch gekennzeichnet, daß sie mit mehreren Paaren ineinanderpassender Vor- und Einwölbungen mit jeweils einem Einlaßkanal (78) versehen ist, der an einem Ende der zugehörigen Einlaß- und Kompressionskammer (56) und der dadurch mit Medium zu versorgenden Verbrennungkammer (70) angeordnet ist, und daß ein Auspuffkanal (80) für jedes Paar ineinanderpassender Vor- und Einwölbungen vorgesehen ist, der in der Gehäuseumfangswand zwischen jedem benachbarten Paar von Gehäuseeinwölbungen angeordnet ist.

7. Brennkraftmaschine nach einem der vorhergehenden Ansprüche, gekennzeichnet durch mittel (92) am Gehäuse zum Einführen eines zündfähigen Kraftstoffes in die oder jedes Verbrennungkammer (70) für eine Verbrennung in dieser zur Kraftbeaufschlagung des einen Teil der Verbrennungskammer begrenzenden Umfangswandbereichs des Wälzkolbens.

Fig. 1

Fig. 2

Fig 3

2

**0 042 890**

Fig. 4

Fig. 5

3

Fig. 6

Fig. 7